# EUROPEAN PATENT APPLICATION

(11) **EP 2 869 456 A1**
(43) Date of publication of application: **06.05.2015**
(21) Application number: 14187247.3
(22) Date of filing: 01.10.2014
(51) Int. Cl.: H02P 1/16, H02P 25/08, H02P 7/00

(54) **Motor acceleration apparatus and method**

(30) Priority: 16.10.2013 KR 20130123528
(71) Applicant: Samsung Electro-Mechanics Co., Ltd., Suwon-si, Gyeonggi-do 443-743 (KR)
(72) Inventor: Son, Joung Ho, 443-743 Suwon-Si, Gyeonggi-Do (KR); Woo, Mu Seon, 443-743 Suwon-Si, Gyeonggi-Do (KR); Shin, Hong Chul, 443-743 Suwon-Si, Gyeonggi-Do (KR); Kim, Dae Sung, 443-743 Suwon-Si, Gyeonggi-Do (KR)
(74) Representative: Heine, Christian Klaus

(57) **Abstract**

Disclosed herein are a motor acceleration apparatus and a motor acceleration method. The motor acceleration apparatus includes: a rectifying unit converting household power into direct current (DC) voltage to output the converted DC voltage; a switching converter switching the DC voltage output from the rectifying unit in an alternating current manner so as to drive a two-phase switched reluctance motor (SRM) ; and a microprocessor controlling the switching converter at the time of initial acceleration of the two-phase SRM so that an initially set dwell angle is changed to a dwell angle in a normal operation state and starting advanced-angle control.

## Description

### CROSS REFERENCE TO RELATED APPLICATION

This application claims the benefit of Korean Patent Application No. 10-2013-0123528, filed on October 16, 2013, entitled "Motor Acceleration Apparatus and Method," which is hereby incorporated by reference in its entirety into this application.

### BACKGROUND OF THE INVENTION

### 1. Technical Field

The present invention relates to a motor acceleration apparatus and a motor acceleration method.

### 2. Description of the Related Art

A switched reluctance motor (SRM) is one of the old motors that have been used over 150 years. As power semiconductors have been developed, this traditional type of reluctance motor has become known as the switched reluctance motor to meet the requirement of variable driving.

'Switched Reluctance' was named by S.A. Nasar, which implies two main features of the SRM.

First, the expression "Switched" means that a motor should always be operated in continuous switching modes. This term has been used after applying a new type of power semiconductor in accordance with development and advance of the new type of power semiconductor.

Second, the expression "Reluctance" means a double salient pole type structure in which a rotor and a stator are operated by varying a reluctance magnetic circuit.

In the 1960s, Scholars such as Nasar, French, Koch, and Lawrenson have devised a continuous mode control using a power semiconductor unlike a structurally similar stepping motor.

At that time, since only a power thyristor semiconductor has a function of controlling a relatively high voltage and current, it has been used to control a switched reluctance motor.

Nowadays, a power transistor, a gate turn-off thyristor (GTO), an insulated gate bipolar mode transistor IGBT, a power metal oxide semiconductor field effect transistor (MOSFET) and the like have been developed and variously used in a rated power range for controlling the SRM.

The SRM has a very simple structure. The SRM does not include a permanent magnet, a brush, and a commutator. In this SRM, a stator includes salient poles and has a structure in which steel sheets are stacked, and windings around which coils connected in series with each other are wound are independently connected to the respective phases and enclose stator poles.

A rotor does not include a winding, has a structure in which steel sheets are stacked, and includes salient poles, similar to the stator. Therefore, since both of the stator and the rotor have the salient pole structure, the SRM may be considered as having a double salient pole type structure.

Due to this simple structure, reliability is increased and a production cost is decreased, such that it is likely that the SRM will substitute for a variable speed drive.

In such control of the SRM, a current sensor may be used which senses sudden current peaks in an abnormal operation to interrupt current, so that IGBT or FET damage may be prevented, compared to the SRM without such a current sensor.

In such control of the SRM, however, large torque is required at the time of initial start-up or acceleration, such that peak current becomes larger.

When this happens, there is a problem in that a current sensor senses over current at the time of initial start-up or acceleration to interrupt motor current.

### [Prior Art Documents]

### [Prior Art Documents]

(Patent Document 1) Japanese Patent Laid-Open Publication No. 2012-005275
(Patent Document 2) Korean Patent Laid-open Publication No. 2001-0036470

### SUMMARY OF THE INVENTION

The present invention has been made in an effort to provide a motor acceleration apparatus and a motor acceleration method which prevent a motor from being interrupted in a normal section in SRM motor control using a current sensor.

According to a first preferred embodiment of the present invention, there is provided a motor acceleration apparatus, including: a rectifying unit converting household power into direct current (DC) voltage to output the converted DC voltage; a switching converter switching the DC voltage output from the rectifying unit in an alternating current manner so as to drive a two-phase switched reluctance motor (SRM) ; and a microprocessor controlling the switching converter at the time of initial acceleration of the two-phase SRM so that an initially set dwell angle is changed to a dwell angle in a normal operation state and starting advanced-angle control.

The microprocessor, upon receiving an on-signal, may control the switching converter so that low current is supplied to windings of the two-phase SRM.

The microprocessor may provide the switching converter with a PWM signal with a duty ratio of 4% or below so that low current is supplied to windings of the two-phase SRM.

The microprocessor may provide the switching converter with a PWM signal with an increasing duty ratio when the initially set dwell angle is changed to the dwell angle in the normal operation state.

The microprocessor may control the switching converter so that advanced-angle control is started when the initially set dwell angle is changed to the dwell angle in the normal operation state.

The microprocessor may perform advanced-angle control in a such manner that the advanced angle is increased from a given advanced angle, for a certain period of time, when the dwell angle is changed to the dwell angle set as the normal operation state and is then maintained.

The switching converter may include: a pair of upper and lower switches in each of the two windings of the two-phase SRM, the upper and lower switches being connected to each other in series above and below the corresponding winding; and a pair of diodes, each disposed at a terminal of each of the two phase windings to be connected to a power supply terminal, wherein the microprocessor controls the advanced angle by adjusting a turn-on time when the pair of upper and lower switches are turned on simultaneously, and controls the dwell angle by adjusting the turn-on time.

The microprocessor may include: an advanced-angle controller performing advanced-angle control by controlling the switching converter; a dwell-angle controller performing dwell angle control by controlling the switching converter; and a speed adjuster controlling the dwell-angle controller at the time of initial acceleration of the two-phase SRM so that an initially set dwell angle of the switching converter is changed to a dwell angle in a normal operation state and starting advanced-angle control of the switching converter by controlling the advanced-angle controller.

The microprocessor may further include a PWM duty controller providing a PWM signal with a duty ratio of 4% or below to the switching converter and providing a PWM signal with an increasing duty ratio to the switching converter when the initially set dwell angle is changed to the dwell angle in the normal operation state.

The microprocessor may further include a negative torque determiner determining whether negative torque is generated in the two-phase SRM, if negative torque is generated in the two-phase SRM, controlling the advanced-angle controller such that the advanced angle is increased and controlling the dwell-angle controller such that the dwell angle is decreased.

According to a second preferred embodiment of the present invention, there is provided a motor acceleration method, including: (a) supplying low current to a switching converter, by a microprocessor, to initially drive a two-phase SRM; and (b) controlling, by the microprocessor, the switching converter such that an initially set swell angle is changed to a swell angle in a normal operation state and starting advanced-angle control.

The (a) supplying may include providing, by the microprocessor upon receiving an on-signal, the switching converter with a PWM signal with a duty ratio of 4% or below so that low current is supplied to windings of the two-phase SRM.

The method may further include (c) providing, by the microprocessor, a PWM signal with an increasing duty ratio to the switching converter when the initially set dwell angle is changed to the dwell angle in the normal operation state.

The (b) controlling may include controlling the switching converter so that advanced-angle control is started when the initially set dwell angle is changed to the dwell angle in the normal operation state.

The method may further include (d) controlling, by the microprocessor, the switching converter such that advanced-angle control is performed in a such manner that the advanced angle is increased from a given advanced angle, for a certain period of time, when the dwell angle is changed to the dwell angle set as the normal operation s state and is then maintained.

The method may further include: (e) determining, by the microprocessor, whether negative torque is generated in the two-phase SRM; and (f) increasing the advanced angle and decreasing the dwell angle, by the microprocessor, if it is determined that negative torque is generated in the two-phase SRM.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a block diagram of an acceleration apparatus for a two-phase switched reluctance motor (SRM) according to a preferred embodiment of the present invention;
FIG. 2 is a graph showing increases in an advanced angle, in a dwell angle, and in a PWM duty ratio;
FIG. 3 is a circuit diagram of the switching converter shown in FIG. 1;
FIGS. 4A through 4D are circuit diagrams for illustrating the operation of a switching converter;
FIG. 5 is a diagram illustrating advanced-angle control and dwell angle control by a switching converter;
FIG. 6 is a block diagram of the microprocessor shown in FIG. 1; and
FIG. 7 is a flowchart illustrating an acceleration method of a two-phase switched reluctance motor (SRM) according to a preferred embodiment of the present invention.

### DESCRIPTION OF THE PREFERRED EMBODIMENTS

The objects, features and advantages of the present invention will be more clearly understood from the following detailed description of the preferred embodiments taken in conjunction with the accompanying drawings. Throughout the accompanying drawings, the same reference numerals are used to designate the same or similar components, and redundant descriptions thereof are omitted. Further, in the following description, the terms "first," "second," "one side," "the other side" and the like are used to differentiate a certain component from other components, but the configuration of such components should not be construed to be limited by the terms. Further, in the description of the present invention, when it is determined that the detailed description of the related art would obscure the gist of the present invention, the description thereof will be omitted.

Hereinafter, preferred embodiments of the present invention will be described in detail with reference to the attached drawings.

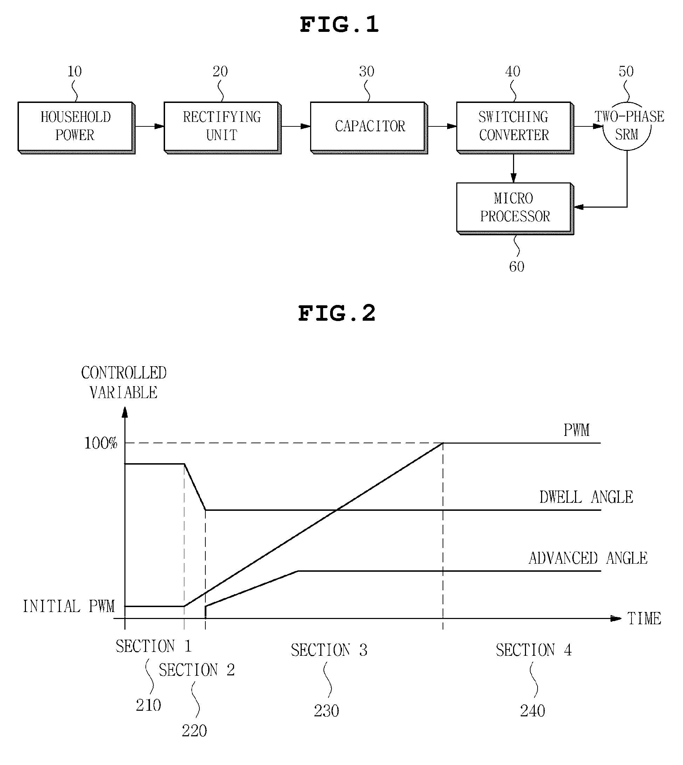

FIG. 1 is a block diagram of an acceleration apparatus for a two-phase switched reluctance motor (SRM) according to a preferred embodiment of the present invention.

Referring to FIG. 1, the acceleration apparatus for a two-phase switched reluctance motor may include a rectifying unit 20 rectifying alternating current (AC) power from a household power source 10 to supply direct current (DC) power, a capacitor 30 connected to the rectifying unit 20,a switching converter 40 connected to the capacitor 30, and a microprocessor 60 sensing the positions and speed of a two-phase SRM 50 to control the switching converter 40.

The rectifying unit 20 rectifies input AC power from the household power source 10 so as to supply DC power to the capacitor 30. The capacitor 30 may improve a power factor of the rectified DC power, absorb noise, to supply it to the switching converter 40.

The switching converter 40 may include a pair of upper and lower switches in each of two phase windings of the two-phase SRM 50, the upper and lower switches being connected to each other in series above and below the corresponding winding, and each disposed at a terminal of each of the two phase windings to be connected to a power supply terminal, wherein the switching convert 40 may be operated in operation modes 1 to 3 according to control of the microprocessor 60 to drive the two-phase SRM 50.

The microprocessor 60 may sense the position and the speed of the two-phase SRM 50 and control the pair of upper and lower switches of the switching converter 40 to allow the switches to be operated in operation modes 1 to 3, thereby driving the two-phase SRM 50.

In operation mode 1, positive DC voltage is applied to a corresponding phase winding of the two-phase SRM 50 to increase current in the winding, in operation mode 2, the current is allowed to be circulated in the winding when it flows in the winding, such that it is slowly decreased, and in operation mode 3, negative DC voltage is applied to a corresponding phase winding to rapidly decrease the current.

The acceleration apparatus for a two-phase switched reluctance motor thus configured is operated as follows.

First, the microprocessor 60 controls the switching converter 40 such that it is operated in operation modes 1 to 3 to excite one of the two phase windings of the two-phase SRM 50 and then finish the excitation state. Subsequently, the microprocessor 60 controls the switching converter 40 such that it is operated in the operation modes 1 to 3 to excite the other of the two phase windings of the two-phase SRM 50 and then finish the excitation state.

Subsequently, the microprocessor 60 repeats the above-described operations to drive the two-phase SRM 50.

Here, there may be various schemes for the microprocessor 60 to control the switching converter 40 such that it is operated in the operation modes 1 to 3.

The microprocessor 60 may control an advanced angle by adjusting a turn-one time and may control a conduction angle by adjusting a turn-one time period in accordance with the speed of the two-phase SRM 50 based on the waveform of an encoder.

According to a preferred embodiment of the present invention, the driving of the two-phase SRM 50 may be controlled by changing an advanced angle, a dwell angle, and a pulse width modulation (PWM) duty ratio. When the advanced angle, the dwell angle, and the PWM duty ratio are changed, the following changes may occur in the driving of the SRM.
1) The advanced angle refers to a period in which power is applied to the winding to excite the winding. When the advanced angle is changed, a turn-on time becomes sooner, such that a current rising time is changed. By changing the dwell angle and the advanced angle, a revolution per minute (RPM) of the SRM may be adjusted. For example, by adjusting the advanced angle to make the turn-on time sooner, a sufficient current rising time is ensured, and by adjusting the dwell angle to make the most of a torque generation region while minimizing the magnitude of the current before it reaches a section in which the negative torque is generated, the generation of the negative torque may be suppressed. That is, in the case where the dwell angle is adjusted, the torque generation region may be utilized as much as possible, but the magnitude of the current may be minimized before it reaches the section in which the negative torque is generated.

In addition, since the torque characteristic of the SRM is unrelated to the directions of the current and has the same sign as that of a gradient of the inductance, it may not be possible to rotate the SRM in the reverse direction by controlling the current only. Therefore, in order to rotate the SRM in the forward or reverse direction, it requires controlling the angle to allow the current to flow in a section in which a torque is generated in a desired rotation direction. In addition, the angle control may also be used at the time of sudden braking.

The dwell angle, as described earlier, refers to a difference between a turn-off angle and a turn-on angle where the position of a rotor at which a stator current is switched on is the turn-on angle and the position of the rotor at which the stator current is switched off in the SRM is the turn-off angle.

When the dwell angle is changed, the section in which the torque is generated is changed in the SRM, such that the variation of the load of the SRM may be controlled.
2) By changing the PWM duty ratio, the current flowing in the two-phase SRM is controlled, such that the variation of the load of the two-phase SRM may be controlled. The changing of the PWM duty ratio to control the variation of the load of the two-phase SRM may be mainly used to control the two-phase SRM driven at low speed or medium speed.

When the two-phase SRM is driven at low speed or medium speed, since back electromotive force and an increase in the inductance of the SRM are slowly generated, a rising ratio of the current by an applied voltage is large, such that a peak current may be larger than when it is driven at high speed. In order to limit this current to be smaller than the current of a switching device, the switching device is turned on or turned off by chopping, thereby controlling the SRM at a desired speed.

Under the situation in which the two-phase SRM 50 is operated as described above, the first section 210 shown in FIG. 2 refers to a state right after an on-signal is input to the microprocessor 60.

At this time, the microprocessor 60 controls the switching converter 40 such that small amount of power flows in one of the windings of the two-phase SRM 50, so that the stator and the rotor of the SRM move to their positions to be in a driving standby state.

When a current flows in a phase of the stator, a torque is generated that tends to rotate the rotor in a direction in which an inductance increases until the rotor arrives at a position at which it has a maximum inductance value.

If no magnetization component remains in an iron core, the directions of the current are unrelated to the polarity of the torque, which tend to move the rotor to the closest alignment position. The dwell angle may be set as an initially set dwell angle.

The duty ratio of the PWM signal provided to the switching converter 40 by the microprocessor 60 is preferably 4% or less (more preferably 4%), preferably for 1 sec or shorter.

The second section 220 refers to a state in which the microprocessor 60 starts to accelerate the two-phase SRM 50 to start the normal operation. In the second section 220, the dwell angle of the SRM is changed from the initially set dwell angle (approximately 60% to 80%) to a dwell angle set as the normal operation state (approximately 40% to 60%). In this time, the PWM duty ratio for initial driving of the motor may rise. That is, by changing the PWM duty ratio, the current flowing in the two-phase SRM is controlled, such that the variation of the load of the two-phase SRM may be controlled.

Preferably, the microprocessor 60 causes the PWM duty ratio to rise when the dwell angle is changed from the initially set dwell angle to a dwell angle set as the normal operation state. Here, the acceleration time may be approximately 3.5 seconds.

As such, the microprocessor 60 causes the PWM duty ratio to rise when the dwell angle is changed from the initially set dwell angle to a dwell angle set as the normal operation state, so that PWM duty ratio rises when the total current amount is reduced due to the change of the dwell angle to thereby increase the total current amount, thereby obtaining smooth acceleration characteristic at the initial acceleration.

Then, the third section 230 refers to an operation control mode section in which the advanced angle (lead angle) is controlled. As described above, when the advanced angle is changed, a turn-on time becomes sooner, such that a current rising time is changed. That is, in the third section 230, by changing the advanced angle, the revolution per minute (rpm) of the SRM may be adjusted.

Preferably, the microprocessor 60 may perform advanced-angle control in a such manner that the advanced angle is increased from a given advance angle, for a certain time period, when the dwell angle is changed to the dwell angle set as the normal operation state and is then maintained.

Further, if the microprocessor 60 starts advanced-angle control when the dwell angle is changed to the dwell angle set as the normal operation state, the turn-on time becomes sooner and thus the current rising time is increased, thereby preventing current peaks.

The fourth section 240 refers to a section in which the PWM frequency increases to the maximum value such that the SRM is driven at the maximum PWM duty ratio. In the fourth section 440, the SRM may be driven at a normal speed.

According to the present invention, if the microprocessor 60 starts advanced-angle control when the dwell angle is changed to the dwell angle set as the normal operation state, the turn-on time becomes sooner and thus the current rising time is increased, thereby preventing current peaks.

As a result, for SRM motor control using a current sensor, it is possible to prevent a motor from being interrupted in a normal section.

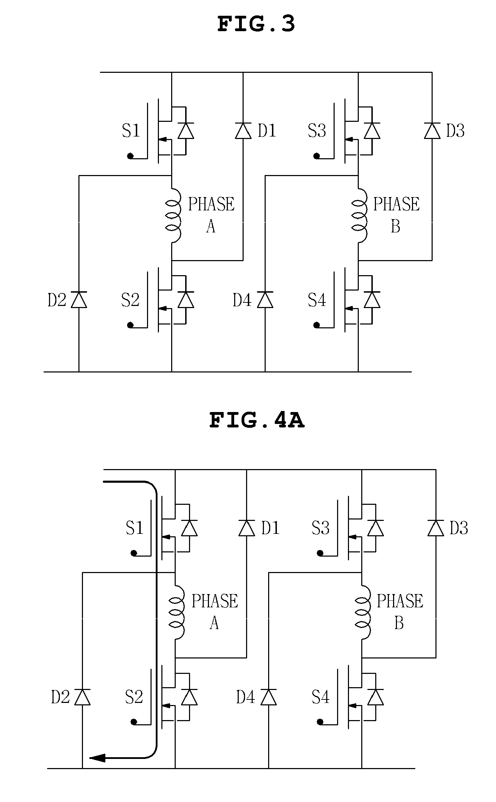

FIG. 3 is a circuit diagram of the switching converter shown in FIG. 1.

Referring to FIG. 3, the switching converter of FIG. 1 may include a first upper switch S1 connected in series to the upper portion of the winding of phase A, a first lower switch S2 connected in series to the lower portion of the winding of phase A, a second upper switch S3 connected in series to the upper portion of the winding of phase B, and a second lower switch S4 connected in series to the lower portion of the winding of phase B.

In addition, the switching converter 40 includes a first diode D1 having an anode connected to the node between the winding of phase A and the first lower switch S2 and a cathode connected to a power supply terminal at one side, and a second diode D2 having an anode connected to a power input terminal at another side and a cathode connected to the node between the winding of phase A and the first upper switch S 1.

In addition, the switching converter 40 includes a third diode D3 having an anode connected to the node between the winding of phase B and the second lower switch S4 and a cathode connected to a power input terminal at one side, and a fourth diode D4 having an anode connected to a power input terminal at another side and a cathode connected to the node between the winding of phase B and the second upper switch S3.

The operation of the switching converter of FIG. 1 will be described below.

Initially, the first upper switch S1 and the first lower switch S2 are turned on. Then, as shown in FIG. 4A, a current loop is formed by the first upper switch S1, the winding of phase A, and the first lower switch S2 (phase A operation mode 1).

After a time period has elapsed from when the first upper switch S1 and the first lower switch S2 are turned on, the switching converter 40 enters a normal operation section from T1 to T2, such that a current Isa by an applied voltage flows in the first upper switch S1. Here, the current Isa flowing in the first upper switch S1 is gradually decreased with time. At this time, a voltage Vsa across the first upper switch S1 becomes 0 when it is turned on.

Further, after a time period has elapsed from when the first upper switch S 1 and the first lower switch S2 are turned on, the zero voltage switching converter 40 enters the normal operation section, such that a current Isb by application of a DC voltage flows in the first lower switch S2. Here, the current Isb flowing in the first lower switch S2 is gradually decreased with time. Here, a voltage Vsb across the first lower switch S2 becomes 0 when it is turned on.

In the normal operation section from T1 to T2, the same current flows in the first upper switch S 1 and in the first lower switch S2.

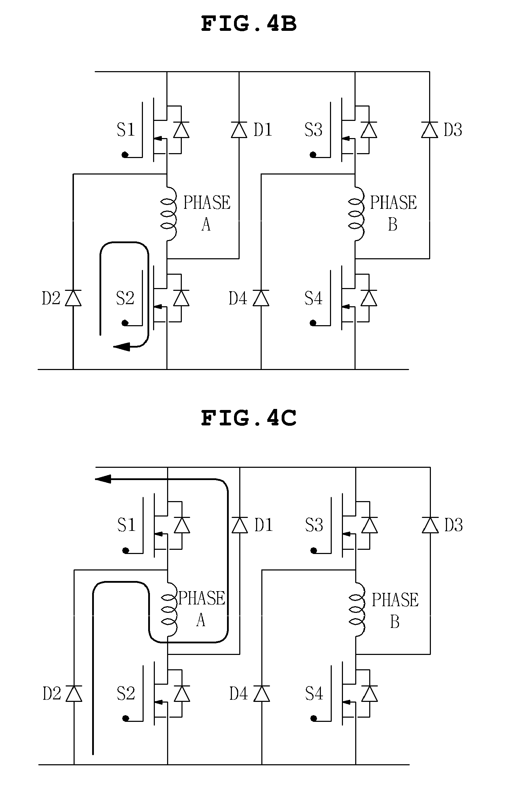

In the next section (section from T2 to T3), the first upper switch S 1 is turned off, and the first lower switch S2 is maintained in a turn-on state. Then, as shown in FIG. 4B, a current loop is formed by the winding of phase A, the first lower switch S2, and the second diode D2 (phase A operation mode 2).

At this time, as the first upper switch S 1 is turned off, no current flows in the first upper switch S1, and a voltage Vsa approximates to the applied DC voltage.

Further, since the first lower switch S2 is maintained in a turn-on state, the current is slowly decreased, and the voltage is not changed from zero voltage as it is turned on.

However, when the first upper switch S 1 is turned off, the current flowing in the winding of phase A is circulated through the second lower switch S2 and the second diode D2.

Accordingly, as shown in FIG. 4B, a current flowing in the current loop formed by the winding of phase A, the first lower switch S2, and the second diode D2 is slowly decreased.

Here, a current Idb flowing in the second diode D2 is the same as the current flowing in the first lower switch S2.

Then, since the first lower switch S2 is maintained in the turn-on state, the current is slowly decreased during section from T3 to T4, and the voltage is not changed from zero voltage as it is turned on.

On the other hand, the first lower switch S2 is turned off (section from T4 to T5).

Then, as the first lower switch S2 is turned off, as shown in FIG. 4C, a current loop is formed by the first diode D1, the winding of phase A, and the second diode D2.

In addition, as the first lower switch S2 is turned off, no current flows in the first lower switch S2 and a voltage Vsb approximates to an input voltage as it is turned off.

At this time, the circulation current of the winding of phase A still flows in the first diode D1 and the second diode D2.

At this time, a current Ida flowing through the first diode D1 is the same as the current flowing in the second diode D2.

In the next section (section from T5 to T6), the second upper switch S3 is turned on while the second lower switch S4 is maintained in the turn-on state.

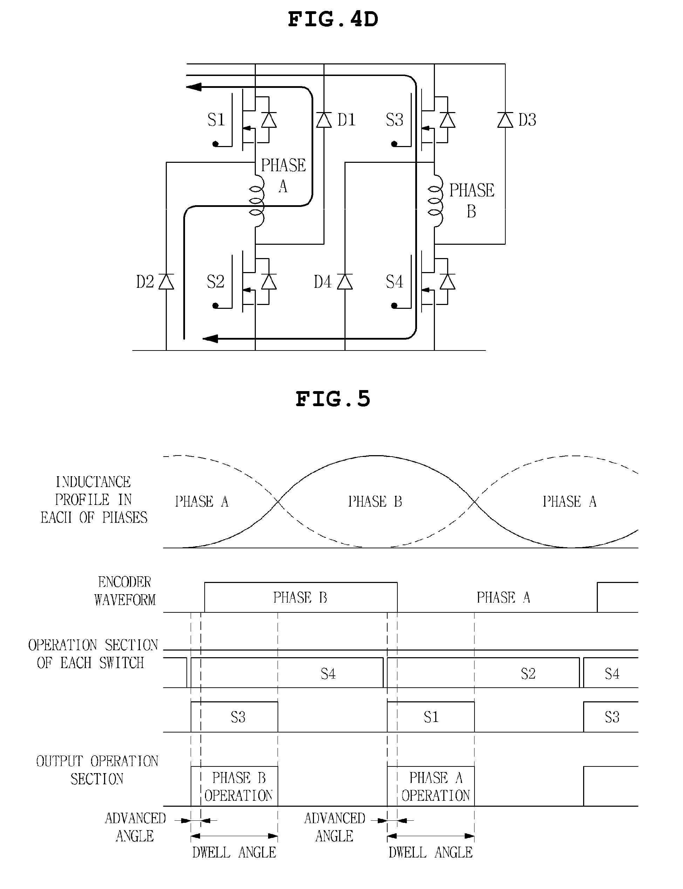

Then, a current loop formed by the second upper switch S3, the winding of phase B, and the second lower switch S4, and a current loop formed by the first diode D1, the winding of phase A, and the second diode are overlapped with each other as shown in FIG. 4D.

Then, a current corresponding to a difference between the current flowing in the winding of phase B and the current flowing in the winding of phase A flows in the second upper switch S3 and the second lower switch S4 (overlapping between a phase A operation mode 3 and a phase B operation mode 1).

In the next section (section from T6 to T7), when the second upper switch S3 and the second lower switch S4 are maintained in the turn-on state, the current flowing in the winding of phase A is slowly decreased, such that only a loop of the current flowing in the second upper switch S3 and the second lower switch S4 remains (the phase B operation mode 1).

Then, a process is repeated which includes turning off the second upper switch S3 while the second lower switch S4 is maintained in the turn-on state (a phase B operation mode 2), turning off the second lower switch S4 after a predetermined time (a phase B operation mode 3), and turning on the first upper switch S1 while the second lower switch S2 is maintained in the turn-on state (overlapping between the phase B operation mode 3 and the phase A operation mode 1) and maintaining the first upper switch S1 in the turn-on state (the phase A operation mode 1), to drive the motor.

In the switching converter 40 as described above, the first lower switch S2 and the second lower switch S4 are turned on in each half period while having a phase difference of 180 degrees therebetween, as shown in FIG. 5. Likewise, the first upper switch S 1 and the second upper switch S3 are also turned on with time intervals therebetween, as shown in FIG. 5.

As shown in FIG. 5, the switching converter 40 may adjust the advanced angle (or lead angle) of the winding of phase A by adjusting turn-on time of the first upper switch S 1 and the first lower switch S2 with respect to the waveform of an encoder.

Further, as shown in FIG. 5, the switching converter 40 may adjust the dwell angle of the winding of phase A by adjusting turn-on time of the first upper switch S 1.

As shown in FIG. 5, the switching converter 40 may adjust the advanced angle (or lead angle) of the winding of phase B by adjusting turn-on time of the second upper switch S3 and the second lower switch S4 with respect to the waveform of an encoder.

Further, as shown in FIG. 5, the switching converter 40 may adjust the dwell angle of the winding of phase B by adjusting turn-on time of the second upper switch S3.

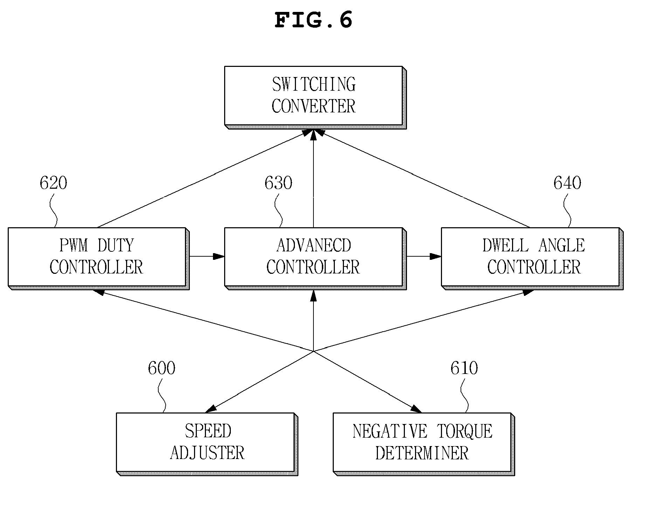

FIG. 6 is a block diagram of the microprocessor shown in FIG. 1.

Referring to FIG. 6, the microprocessor shown in FIG. 1 may include a speed adjuster 600, a negative torque determiner 610, a PWM duty controller 620, an advanced-angle controller 630, and a dwell-angle controller 640.

The speed adjuster 600 may be implemented so as to determine whether the target driving speed has been reached in driving the two-phase SRM. For example, when it is desired to drive the SRM at 1000 rpm, the target speed of the SRM may be set to 1000 rpm, and it may be determined that the current driving speed has arrived at the target speed.

If it is determined that the current speed is below or above the target speed, the speed adjuster 600 controls the PWM duty controller 620, the advanced-angle controller 630, and the dwell-angle controller 640 so that the current speed approximates to the target speed.

The negative torque determiner 610 may determine whether the negative torque has been generated in the two-phase SRM 50.

If the negative torque determiner 610 determines that no negative torque has been generated, it may be determined that the SRM is in a target operation state and the two-phase SRM 50 may be driven with the set dwell angle and advanced angle.

To the contrary, if the negative torque determiner 610 determines that the negative torque has been generated, it may instruct the dwell-angle controller 640 to decrease the dwell angle and may instruct the advanced-angle controller 630 to increase the advanced angle.

Then, the PWM duty controller 620 controls the duty of the PWM signal provided to the switching converter 40 of the two-phase SRM 50.

Then, the advanced-angle controller 630 controls the advanced angle by controlling the switching converter 40 of the two-phase SRM 50.

Then, the dwell-angle controller 640 controls the dwell angle by controlling the switching converter 40 of the two-phase SRM 50.

The operation of the microprocessor of FIG. 1 will be described below.

Initially, the speed adjuster 600 controls the PWM duty controller 620 so that it provides an initial starting current immediately after an on-signal comes in the first section 210 shown in FIG. 2.

Then, the PWM duty controller 620 provides the initial starting current of low level such that the duty ratio of the PWM signal provided to the switching converter 40 is 4% or below, preferably 4%.

As such, once the PWM duty controller 620 provides the switching converter 40 with the initial starting current such that small amount of power flows in one of the windings of the two-phase SRM 50, the stator and the rotor of the SRM move to their positions to be in a driving standby state.

When a current flows in a phase of the stator, a torque is generated that tends to rotate the rotor in a direction in which an inductance increases until the rotor arrives at a position at which it has a maximum inductance value.

If no magnetization component remains in an iron core, the directions of the current are unrelated to the polarity of the torque, which tend to move the rotor to the closest alignment position. At this time, the dwell-angle controller 640 sets the dwell angle as the initially set dwell angle.

Then, in the second section 220 shown in FIG. 2, the speed adjuster 600 controls the PWM controller 620 so that it increases the duty ratio, and controls the dwell-angle controller 640 so that it changes the dwell angle of the two-phase SRM from the initially set dwell angle to the dwell angle set as the normal operation state.

Then, the PWM duty controller 620 increases the PWM duty ratio for initial driving. By changing the PWM duty ratio in this manner, the current flowing in the two-phase SRM is controlled, such that the variation of the load of the two-phase SRM may be adjusted.

Further, the dwell-angle controller 640 may change the dwell angle of the two-phase SRM from the initially set dwell angle to the dwell angle set as the normal operation state.

Preferably, the speed adjuster 600 causes the PWM duty ratio to rise when the dwell angle is changed from the initially set dwell angle to the dwell angle set as the normal operation state.

As such, the microprocessor 60 causes the PWM duty ratio to rise when the dwell angle is changed from the initially set dwell angle to a dwell angle set as the normal operation state, so that PWM duty ratio rises when the total current amount is reduced due to the change of the dwell angle to thereby increase the total current amount, thereby obtaining smooth acceleration characteristic at the initial acceleration.

Then, the speed adjuster 600 controls the advanced-angle controller 630 so that it increases the advanced angle in the third section 230 shown in FIG. 2.

Preferably, the advanced-angle controller 630 performs advanced-angle control in a such manner that the advanced angle is increased from a given advance angle, for a certain time period, when the dwell angle is changed to the dwell angle set as the normal operation state and is then maintained.

As described above, when the advanced angle is changed, a turn-on time becomes sooner, such that a current rising time is changed. That is, in the third section 230, by changing the advanced angle, the revolution per minute (rpm) of the SRM may be adjusted.

As such, if the speed adjuster 600 starts advanced-angle control when the dwell angle is changed to the dwell angle set as the normal operation state, the turn-on time becomes sooner and thus the current rising time is increased, thereby preventing current peaks.

Then, since the current speed has been reached the target speed in the fourth section 240 shown in FIG. 2, the speed adjuster 600 controls the PWM duty controller 620 so that it maintains the PWM duty.

The negative torque determiner 610 may determine whether the negative torque has been generated in the two-phase SRM 50.

If the negative torque determiner 610 determines that no negative torque has been generated, it may be determined that the SRM 50 is in a target operation state and the two-phase SRM 50 may be driven with the set dwell angle and advanced angle.

To the contrary, if the negative torque determiner 610 determines that the negative torque has been generated, it may instruct the dwell-angle controller 640 to decrease the dwell angle and may instruct the advanced-angle controller 630 to increase the advanced angle.

According to the present invention, if the microprocessor 60 starts advanced-angle control when the dwell angle is changed to the dwell angle set as the normal operation state, the turn-on time becomes sooner and thus the current rising time is increased, thereby preventing current peaks.

As a result, for SRM motor control using a current sensor, it is possible to prevent a motor from being interruppted in a normal section.

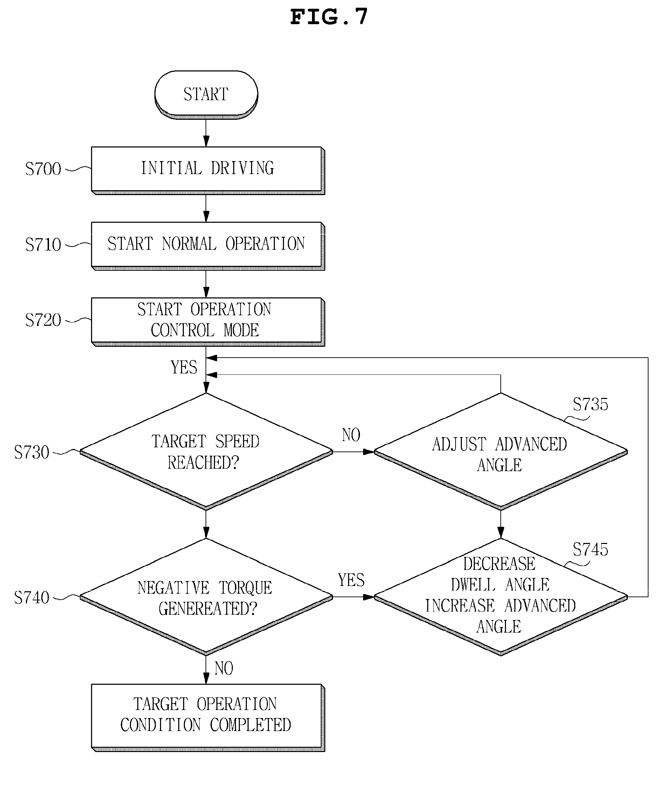

FIG. 7 is a flowchart illustrating a method of accelerating a two-phase SRM according to a first preferred embodiment of the present invention.

Referring to FIG. 7, initial driving is performed (S700).

In operation S700, the operation of the first section of FIG. 2 described above may be performed.

In operation S700, in order to perform the initial driving of the SRM, small amount of power may be allowed to flow in the windings of the SRM to move the stator and the rotor of the SRM to move to their positions to be in a driving standby state. The dwell angle of the SRM is changed from the initially set dwell angle to the dwell angle set in the normal operation state. That is, a control for the PWM duty ratio, the advanced angle, and the dwell angle is performed in order to perform the initial driving of the SRM, thereby making it possible to change the SRM to be in a normal driving step.

To this end, the speed adjuster 600 controls the PWM duty controller 620 so that it provides an initial starting current immediately after an on-signal comes in.

Then, the PWM duty controller 620 provides the initial starting current of low level such that the duty ratio of the PWM signal provided to the switching converter 40 is 4% or below, preferably 4%.

As such, once the PWM duty controller 620 provides the switching converter 40 with the initial starting current such that small amount of power flows in one of the windings of the two-phase SRM 50, the stator and the rotor of the SRM move to their positions to be in a driving standby state.

Then, the two-phase SRM 50 stats to operate normally (S710).

To this end, the PWM duty ratio is increased so as to drive the two-phase SRM 50 at normal speed. In normal driving state of the two-phase SRM 50, the SRM may be operated at a set dwell angle and an advanced angle.

Specifically, the speed adjuster 600 controls the PWM duty controller 620 so that it increases the duty ratio, and controls the dwell-angle controller 640 so that it changes the dwell angle of the two-phase SRM from the initially set dwell angle to the dwell angle set as the normal operation state.

Then, the PWM duty controller 620 increases the PWM duty ratio for initial driving. By changing the PWM duty ratio in this manner, the current flowing in the two-phase SRM is controlled, such that the variation of the load of the two-phase SRM may be adjusted.

Further, the dwell-angle controller 640 may change the dwell angle of the two-phase SRM from the initially set dwell angle to the dwell angle set as the normal operation state.

Preferably, the speed adjuster 600 causes the PWM duty ratio to rise when the dwell angle is changed from the initially set dwell angle to the dwell angle set as the normal operation state.

Then, an operation control mode of the two-phase SRM is performed (S720).

The operation control mode refers to an operation mode of comparing a current speed with a target speed so as to instruct to control the current speed to be the target speed.

The operation control mode of the two-phase SRM according to preferred embodiments of the present invention may determine whether a target speed has been reached, and whether negative torque has been generated if the target speed has been reached, to change an advanced angle and a dwell angle.

First, the speed adjuster 600 of the microprocessor 60 determines whether a target speed has been reached (S730).

If it is determined that the target speed has not been reached, the speed adjuster 600 controls the advanced angle so that the two-phase SRM may be driven at the target speed.

Preferably, the advanced-angle controller 630 performs advanced-angle control in a such manner that the advanced angle is increased from a given advance angle, for a certain time period, when the dwell angle is changed to the dwell angle set as the normal operation state and is then maintained.

Then, after the target speed has been reached, the negative torque determiner 610 determines whether negative torque has been generated (S740).

If it is determined that negative torque has been generated, the advanced angle may be increased and the dwell angle may be decreased (S745). For example, the advanced angle may be increased by 5 degrees and the dwell angle may be decrease by 3 degrees.

As set forth above, according to the present invention, if the microprocessor 60 starts advanced-angle control when the dwell angle is changed to the dwell angle set as the normal operation state, the turn-on time becomes sooner and thus the current rising time is increased, thereby preventing current peaks.

As a result, according to the present invention, for SRM motor control using a current sensor, it is possible to prevent a motor from being interrupted in a normal section.

Although the embodiments of the present invention have been disclosed for illustrative purposes, it will be appreciated that the present invention is not limited thereto, and those skilled in the art will appreciate that various modifications, additions and substitutions are possible, without departing from the scope and spirit of the invention.

Accordingly, any and all modifications, variations or equivalent arrangements should be considered to be within the scope of the invention, and the detailed scope of the invention will be disclosed by the accompanying claims.

## Claims

1. A motor acceleration apparatus, comprising:
a rectifying unit converting household power into direct current (DC) voltage to output the converted DC voltage;
a switching converter switching the DC voltage output from the rectifying unit in an alternating current manner so as to drive a two-phase switched reluctance motor (SRM); and
a microprocessor controlling the switching converter at the time of initial acceleration of the two-phase SRM so that an initially set dwell angle is changed to a dwell angle in a normal operation state, and starting advanced-angle control.

2. The motor acceleration apparatus as set forth in claim 1, wherein the microprocessor, upon receiving an on-signal, controls the switching converter so that low current is supplied to windings of the two-phase SRM for a certain period of time.

3. The motor acceleration apparatus as set forth in claim 2, wherein the microprocessor provides the switching converter with a PWM signal with a duty ratio of 4% or below so that low current is supplied to windings of the two-phase SRM for a certain period of time.

4. The motor acceleration apparatus as set forth in claim 2, wherein the microprocessor provides the switching converter with a PWM signal with an increasing duty ratio when the initially set dwell angle is changed to the dwell angle in the normal operation state.

5. The motor acceleration apparatus as set forth in claim 1, wherein the microprocessor controls the switching converter so that advanced-angle control is started when the initially set dwell angle is changed to the dwell angle in the normal operation state.

6. The motor acceleration apparatus as set forth in claim 1, wherein the microprocessor performs the advanced-angle control by controlling the switching converter in a such manner that the advanced angle is increased from a given advanced angle, for a certain period of time, when the dwell angle is changed to the dwell angle set as the normal operation state and is then maintained.

7. The motor acceleration apparatus as set forth in claim 1, wherein the switching converter includes:
a pair of upper and lower switches in each of the two windings of the two-phase SRM, the upper and lower switches being connected to each other in series above and below the corresponding winding; and
a pair of diodes, each disposed at a terminal of each of the two phase windings to be connected to a power supply terminal, and wherein the microprocessor controls the advanced angle by adjusting a turn-on time when the pair of upper and lower switches are turned on simultaneously, and controls the dwell angle by adjusting the turn-on time.

8. The motor acceleration apparatus as set forth in claim 1, wherein the microprocessor includes:
an advanced-angle controller performing advanced-angle control by controlling the switching converter;
a dwell-angle controller performing dwell angle control by controlling the switching converter; and
a speed adjuster controlling the dwell-angle controller at the time of initial acceleration of the two-phase SRM so that an initially set dwell angle of the switching converter is changed to a dwell angle in a normal operation state and starting the advanced-angle control of the switching converter by controlling the advanced-angle controller.

9. The motor acceleration apparatus as set forth in claim 8, wherein the microprocessor further includes a PWM duty controller providing a PWM signal with a duty ratio of 4% or below to the switching converter and providing a PWM signal with an increasing duty ratio to the switching converter when the initially set dwell angle is changed to the dwell angle in the normal operation state.

10. The motor acceleration apparatus as set forth in claim 8, wherein the microprocessor further includes a negative torque determiner determining whether negative torque is generated in the two-phase SRM, if negative torque is generated in the two-phase SRM, controlling the advanced-angle controller such that the advanced angle is increased and controlling the dwell-angle controller such that the dwell angle is decreased.

11. A motor acceleration method, comprising:
(a) supplying low current to a switching converter, by a microprocessor, to initially drive a two-phase SRM; and
(b) controlling, by the microprocessor, the switching converter such that an initially set swell angle is changed to a swell angle in a normal operation state and starting advanced-angle control.

12. The motor acceleration method as set forth in claim 11, wherein the (a) supplying includes providing, by the microprocessor upon receiving an on-signal, the switching converter with a PWM signal with a duty ratio of 4% or below so that low current is supplied to windings of the two-phase SRM.

13. The motor acceleration method as set forth in claim 11, further comprising (c) providing, by the microprocessor, a PWM signal with an increasing duty ratio to the switching converter when the initially set dwell angle is changed to the dwell angle in the normal operation state.

14. The motor acceleration method as set forth in claim 11, wherein the (b) controlling includes controlling, by the microprocessor, the switching converter so that advanced-angle control is started when the initially set dwell angle is changed to the dwell angle in the normal operation state.

15. The motor acceleration method as set forth in claim 11, further comprising (d) controlling, by the microprocessor, the switching converter such that advanced-angle control is performed in a such manner that the advanced angle is increased from a given advanced angle, for a certain period of time, when the dwell angle is changed to the dwell angle set as the normal operation state and is then maintained.

16. The motor acceleration method as set forth in claim 11, further comprising:
(e) determining, by the microprocessor, whether negative torque is generated in the two-phase SRM; and
(f) increasing the advanced angle and decreasing the dwell angle, by the microprocessor, if it is determined that negative torque is generated in the two-phase SRM.
